# EUROPEAN PATENT SPECIFICATION

(11) **EP 2 008 549 B1**
(45) Date of publication and mention of the grant of the patent: **16.05.2012**
(21) Application number: 07740269.1
(22) Date of filing: 29.03.2007
(51) Int. Cl.: A47C 27/12, B60N 2/44, B68G 7/05, D04H 1/54

(54) **CUSHION BODY, SITTING SEAT AND PROCESS FOR MANUFACTURING THEM**
KISSENKÖRPER, SITZ UND HERSTELLUNGSVERFAHREN DAFÜR
ÉLÉMENT COUSSIN, SIÈGE ET PROCÉDÉ DE FABRICATION ASSOCIÉ

(30) Priority: 31.03.2006 JP 2006099573
(43) Date of publication of application: 31.12.2008
(73) Proprietor: TS Tech Co., Ltd., Asaka-shi, Saitama 351-0012 (JP)
(72) Inventor: ITO, Mika, Shioya-gun, Tochigi 329-1217 (JP); TAKEI, Yasuchika, Shioya-gun, Tochigi 329-1217 (JP)
(74) Representative: Grünecker, Kinkeldey, Stockmair & Schwanhäusser
(86) International application number: PCT/JP2007/056831
(87) International publication number: WO 2007/114233

(56) References cited:
- EP-A1- 0 567 921
- JP-A- 08 318 066
- JP-A- 10 280 265
- JP-A- 2000 107 470
- JP-A- 2001 054 690
- US-A- 3 691 569

## Description

### TECHNICAL FIELD

The present invention relates to a cushion body, a seat, and a method of manufacturing the same, and in particular to a cushion body and a seat using a fibrous structure composed of polyester fibers or the like, and a method of manufacturing the same.

### BACKGROUND ART

Conventionally, a seat using a fibrous structure composed of polyester fibers or the like as a cushion body has been known (for example, see Patent Documents 1, 2).

The fibrous structure used in the seat described in Patent Document 1 is formed by successively folding a web obtained by dispersing and incorporating thermally adhesive composite short fibers as adhesive component into matrix fibers composed of an inelastic polyester crimped short fiber assembly in a standing state along its longitudinal direction. That is, this fibrous structure is formed to have a predetermined thickness by folding the web in an accordion shape.

In the seat described in Patent Document 1, each of a seat portion and a seat back portion is constituted by stacking a plurality of this fibrous structures to form a cushion body and coating this cushion body with a cover. Accordingly, in this seat, since the standing direction of the web (a thickness direction of the cushion body) is directed along a load direction during sitting of a seat occupant, excellent ventilation is, of course, secured, a proper hardness to a load direction is provided, and load can be dispersed. Therefore, this seat can provide soft touch feeling which cannot be obtained by urethane conventionally used in general.

In the seat described in Patent Document 2, a plurality of fibrous structures are stacked and disposed in a compressed state in a mold in which a large number of ventilation holes are formed, and hot air and steam is ventilated through the mold. Thereby, the hot air and steam passes through the mold, the fibrous structures are thermally molded, and a cushion body with a predetermined shape is formed.

Patent Document 1:Japanese Patent Laid Open Publication No.1996(H08)-318066
Patent Document 2:Japanese Patent Laid Open Publication No.2000-107470

A further fibrous seat is described in EP 0567921 A1

### DISCLOSURE OF THE INVENTION

### PROBLEM TO BE SOLVED BY THE INVENTION

However, the seat described in Patent Document 1 is favorable for those having a sitting surface and the like of the cushion body with a two-dimensional structure but not sufficient for those with a three-dimensional structure. That is, since with the art in Patent Document 1, an undulation shape such as a groove portion can not be provided in a load contact surface, a seat with a favorable sitting feeling can not be obtained.

On the other hand, in the seat described in Patent Document 2, the undulation shape such as a groove portion can be provided on the sitting surface and the like of the cushion body, but there is a problem that touch feeling at sitting is hard in order to support a sufficient load.

That is, since the seat described in Patent Document 1 has a structure that a longitudinal direction of fibers extends along a load direction, it can support a sufficient load while maintaining soft touch feeling.

On the other hand, since the seat described in Patent Document 2 does not have a structure that a longitudinal direction of fibers extends in a load direction, the cushion body should be molded hard to some extent in order to support the load.

An object of the present invention is to provide a cushion body and a seat using the cushion body which can prevent slackening of an undulation shape such as a groove portion formed on a surface layer of the cushion body so as to maintain the undulation shape stably and has soft touch feeling, and a method of manufacturing the same.

### MEANS FOR SOLVING THE PROBLEM

A cushion body of the present invention is a cushion body obtained by molding a fibrous structure obtained by mixing main fibers and binder fibers using a mold having a cavity with a predetermined shape, wherein the cushion body is formed by stacking a plurality of the fibrous structures, a groove portion in a recess state in a thickness direction of the fibrous structure is formed on a surface layer, the fibrous structure is formed by stacking the web so that the web extends along a thickness direction of the fibrous structure, and the fibrous structure stacked in the surface layer has a thickness substantially equal to or smaller than a depth of the groove portion.

Thus, since the cushion body of the present invention is formed by the fibrous structure obtained by stacking the web so that the web in which the main fibers and the binder fibers are blended extends along the thickness direction, the fibrous structure is largely flexed in the thickness direction upon receipt of a load in the thickness direction of the fibrous structure due to sitting. Thus, soft touch feeling can be given to a seat occupant at sitting.
Also, since the groove portion in a recess state in the thickness direction of the fibrous structure is formed in the surface layer of the cushion body and the fibrous structure stacked in the surface layer of the cushion body has a thickness substantially equal to or smaller than the depth of the groove portion, the fibrous structure stacked in the surface layer of the cushion body is brought into a state pushed open to the depth in the thickness direction. Thus, a force of the web to return in the direction along the thickness direction is small and thus, an R-shape of the groove portion is hard to go slack or loose. Accordingly, shape reproduction of the groove portion formed in the surface layer of the cushion body becomes favorable.

The seat of the present invention is a seat including a cushion body and a seat frame supporting the cushion body, wherein the cushion body uses the cushion body described above.
Moreover, the seat of the present invention is characterized in that a cover is affixed on the surface of the cushion body in the seat.

With such configuration, shape reproduction of the groove portion in the seat of the present invention becomes favourable.

The method of manufacturing a cushion body according to the present invention is a method of manufacturing a cushion body comprising a plurality of fibrous structures, comprising at least: a fibrous structure forming step of successively folding a web composed of main fibers and binder fibers for each predetermined length to form a fibrous structure with a predetermined thickness as a stacked state; a fibrous structure disposing step of disposing the plurality of fibrous structures in a mold having a groove formation portion formed on a mold face for forming a groove portion in a recess state in a thickness direction of the cushion body in a compressed state so that the fibrous structure having a thickness substantially equal to or smaller than a depth of the groove portion is brought into contact with the groove formation portion; and a molding step of thermally molding the fibrous structure in the mold to form a cushion body.

Thus, in the method of manufacturing a cushion body according to the present invention, since web is formed by the fibrous structure stacked so that the extending direction of the web in which the main fibers and the binder fibers are blended is along the thickness direction of the fibrous structure, soft touch feeling can be given to a seat occupant at sitting.

Also, since the groove portion in a recess state in the thickness direction of the fibrous structure is formed in the surface layer of the cushion body and the fibrous structure stacked in the surface layer of the cushion body has a thickness substantially equal to or smaller than the depth of the groove portion, the R-shape of the groove portion is hard to go slack or loose. Accordingly, the shape reproduction of the groove portion formed in the surface layer of the cushion body becomes favorable.

Moreover, in the method of manufacturing a cushion body according to the present invention, since the plurality of fibrous structures are disposed in a state that they are stacked and compressed in the mold and be thermally molded, integral molding can be preformed in the mold. Therefore, a bonding step can be skipped unlike a case that the fibrous structures are bonded to each other using adhesive, so that tact time spent for cushion body manufacture can be reduced.

Also, in the molding step, it is preferable that steam is blown to the fibrous structure through steam holes formed on a mold face of the mold under barometrical pressure higher than atmospheric pressure.

Thus, in the method of manufacturing a cushion body, the fibrous structures are disposed in the mold formed with steam holes in a compressed state thereof, and steam is brown to the mold while barometrical pressure around the mold is kept at a saturated steam pressure or more at a blowing temperature (molding temperature) of the steam blown to the mold. Thereby, steam blown to the mold can pass through the inside of the fibrous structures through the steam holes formed in the mold without causing adiabatic expansion while it is being kept at a molding temperature. At this time, since steam has heat capacity larger than hot air, the fibrous structure can be molded in a short time so that a molding time can be reduced largely in the present invention. Since the molding time is reduced, heating process time of the fibrous structure is reduced, so that texture of the cushion body after molded can be made good.

Furthermore, in this case, it is preferable that the steam holes are formed to be more in a region corresponding to the side of a non-load receiving face where a load from outside the cushion body is not received than in a region corresponding to the load receiving face where the load from outside the cushion body is received in the mold, and steam is preferably blown to the fibrous structure through the steam holes on the side of the non-load receiving face in the molding step.

Thus, in the method of manufacturing a cushion body according to the present invention, since the number of steam holes on the side of the load receiving face on the mold is larger than that on the side of the non-load receiving face, an amount of steam introduced from the side of the non-load receiving face into the mold becomes more than that introduced from the load receiving face. When the amount of steam introduced is increased, the number of fibers melded and fixed by thermal molding increases so that a structure of the fibrous structure is made firm and hardness thereof is increased. Therefore, hardness of a surface layer of the fibrous structure disposed on the side of the non-load receiving face becomes harder than that of a surface layer of the fibrous structure disposed on the load receiving face. That is, it is possible to lower the hardness of the load receiving face side receiving load from the outside due to sitting and the like and decrease a flexing degree, to a load, of the non-load receiving face side.

Accordingly, it is made possible to provide a cushion body having both soft touch feeling during sitting on a seat and durability to load due to sitting on the seat.

A method of manufacturing a seat according to the present invention is a method of manufacturing a seat comprising a cushion body and a seat frame supporting the cushion body, comprising at least: a step of forming the cushion body according to any one of the manufacturing method of the cushion body described above; and a step of attaching the cushion body to the seat frame.

With such method of manufacturing, the favorable shape reproduction of the groove portion in the seat can be provided.

An exemplary method of manufacturing a seat is a method of manufacturing a seat comprising a cushion body made from a plurality of fibrous structures, a cover covering the surface of the cushion body, and a seat frame supporting the cushion body, comprising at least: a fibrous structure forming step of successively folding a web composed of main fibers and binder fibers for each predetermined length to form a fibrous structure with a predetermined thickness as a stacked state; a fibrous structure disposing step of disposing the plurality of fibrous structures and the cover in a mold having a groove formation portion formed on a mold face for forming a groove portion in a recess state in a thickness direction of the cushion body in a compressed state so that the fibrous structure having a thickness substantially equal to or smaller than a depth of the groove portion is brought into contact with the groove formation portion through the cover; a molding step of thermally molding the fibrous structure in the mold to integrally mold a cushion body on which the cover is affixed on the surface; and a step of attaching the molded cushion body to the seat frame.

With the above manufacturing method, integral molding of the cushion body and the cover in the mold becomes possible, by which tact time spent for seat manufacture can be reduced.

### Effect of the Invention

According to the present invention, since the cushion body is formed by the fibrous structure obtained by stacking the web so that the web in which the main fibers and the binder fibers are blended extends along the thickness direction, the fibrous structure is largely flexed in the thickness direction upon receipt of a load in the thickness direction of the fibrous structure due to sitting and the like, by which soft touch feeling can be given to a seat occupant at sitting.

Also, since the groove portion in a recess state in the thickness direction of the fibrous structure is formed in the surface layer of the cushion body and the fibrous structure stacked in the surface layer of the cushion body has a thickness substantially equal to or smaller than the depth of the groove portion, a force of the web in a pushed-open state to return in the direction along the thickness direction is small and thus, an R-shape of the groove portion is hard to go slack or loose. Accordingly, shape reproduction of the groove portion formed in the surface layer of the cushion body becomes favorable.

### BRIEF DESCRIPTION OF THE DRAWINGS

[Fig. 1] Fig. 1 is an explanatory view of a seat according to an embodiment of the present invention.
[Fig. 2] Fig. 2 is an explanatory diagram of a fiber direction of a web according to an embodiment of the present invention.
[Fig. 3] Fig. 3 is an explanatory diagram of a manufacturing step of a sheet-like fibrous structure according to an embodiment of the present invention.
[Fig. 4] Fig. 4 is an explanatory diagram of the sheet-like fibrous structure before stacked according to an embodiment of the present invention.
[Fig. 5] Fig. 5 is an explanatory view of a mold according to an embodiment of the present invention.
[Fig. 6] Fig. 6 is an explanatory diagram of a manufacturing step of a cushion body according to an embodiment of the present invention.
[Fig. 7] Fig. 7 is an explanatory diagram of a manufacturing step of the cushion body according to an embodiment of the present invention.
[Fig. 8] Fig. 8 is a sectional explanatory diagram of the cushion body according to an embodiment of the present invention.
[Fig. 9] Fig. 9 is an explanatory diagram illustrating a region in a circle in Fig. 8 in an enlarged manner.
[Fig. 10] Fig. 10 is an explanatory diagram illustrating a problem if a groove portion 12 is formed at a first sheet-like fibrous structure 4a without providing a surface layer sheet-like fibrous structure 4e.
[Fig. 11] Fig. 11 is sectional views illustrating a state where a seat portion of a seat is cut in a widthwise direction.

### EXPLANATION OF REFERENCE NUMERALS

- 1:: seat
- 2:: web
- 4a:: first sheet-like fibrous structure (fibrous structure)
- 4b:: second sheet-like fibrous structure (fibrous structure)
- 4c:: U-shaped sheet-like fibrous structure
- 4d:: protrusion type sheet-like fibrous structure
- 4e:: surface layer sheet-like fibrous structure (fibrous structure)
- 10:: seat portion
- 10a:: sitting surface (load receiving face)
- 10b:: back surface (non-load receiving face)
- 11, 21:: cushion body
- 12:: groove portion
- 13, 23:: cover
- 15, 25:: seat frame
- 17:: trim cord
- 19:: engagement portion
- 20:: seat back portion
- 40:: mold
- 40a:: cavity
- 41:: first mold
- 41a:: groove formation portion
- 42:: second mold
- 43:: steam hole
- 50:: high pressure steam molding machine
- 61:: driving roller
- 62:: hot air suction type heat treating machine
- a:: fiber constituting web
- b:: lengthwise direction of web
- c:: fiber direction constituting web
- θ:: angle of lengthwise direction of fiber to lengthwise direction of web

### BEST MODE FOR CARRYING OUT THE INVENTION

One embodiment of the present invention will be explained below with reference to the drawings. Incidentally, parts, arrangements or the like explained below do not limits to the present invention, and the present invention can be modified variously within the scope and spirit of the present invention.

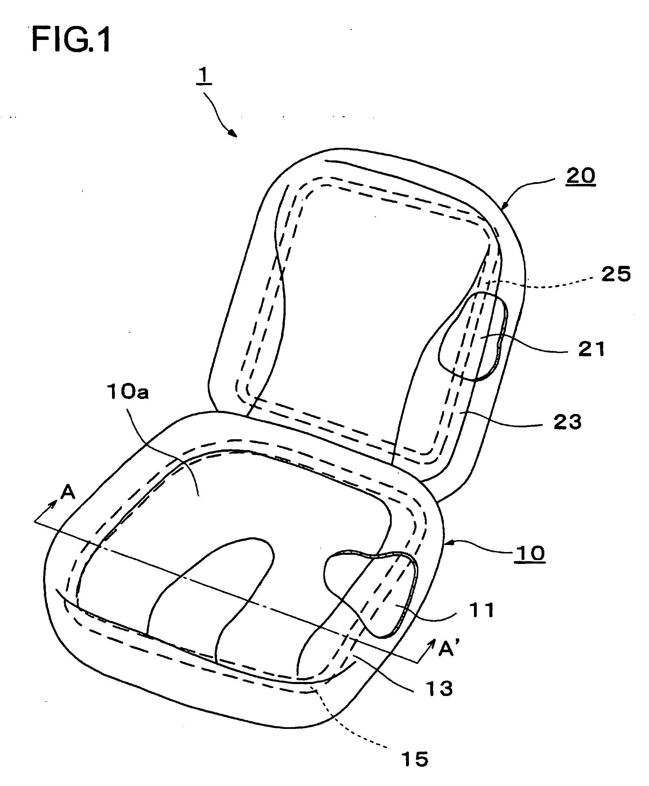

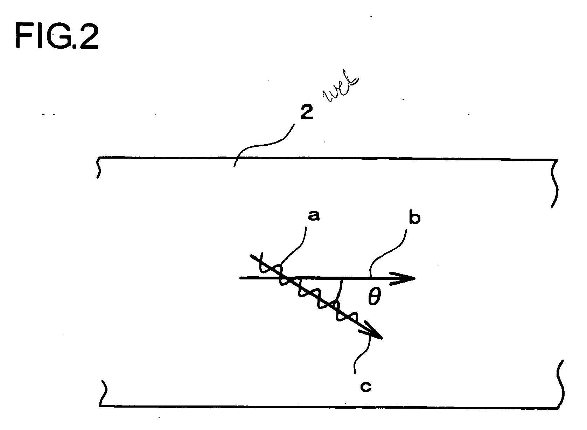

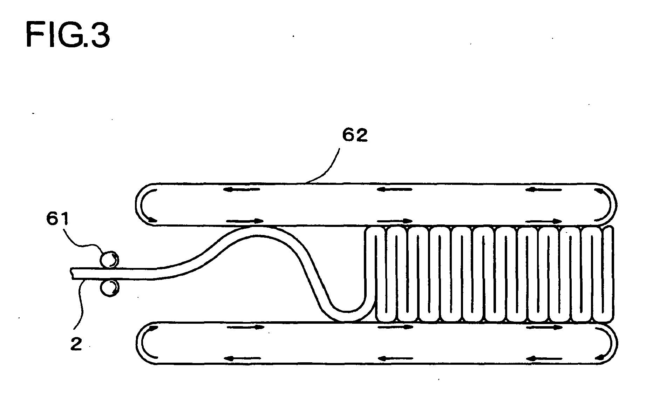

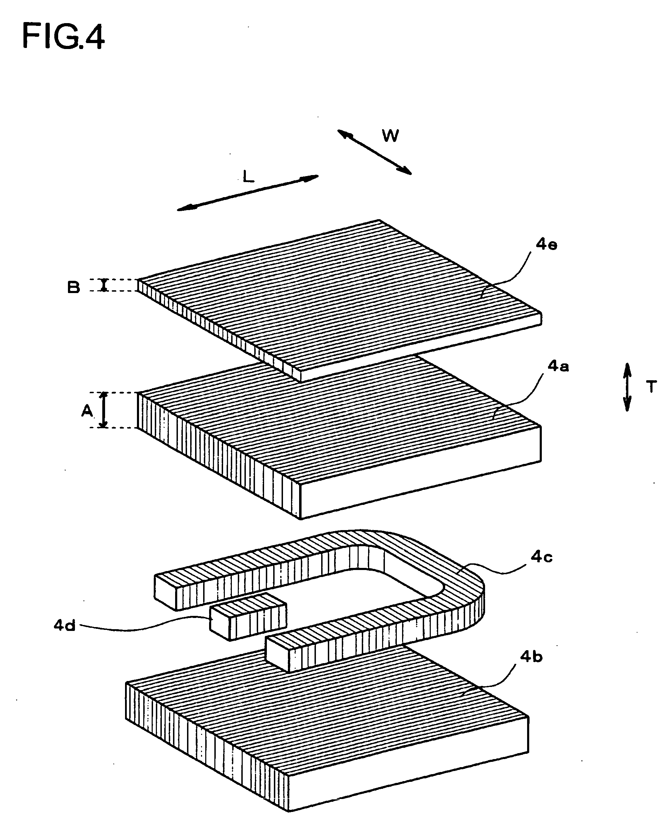

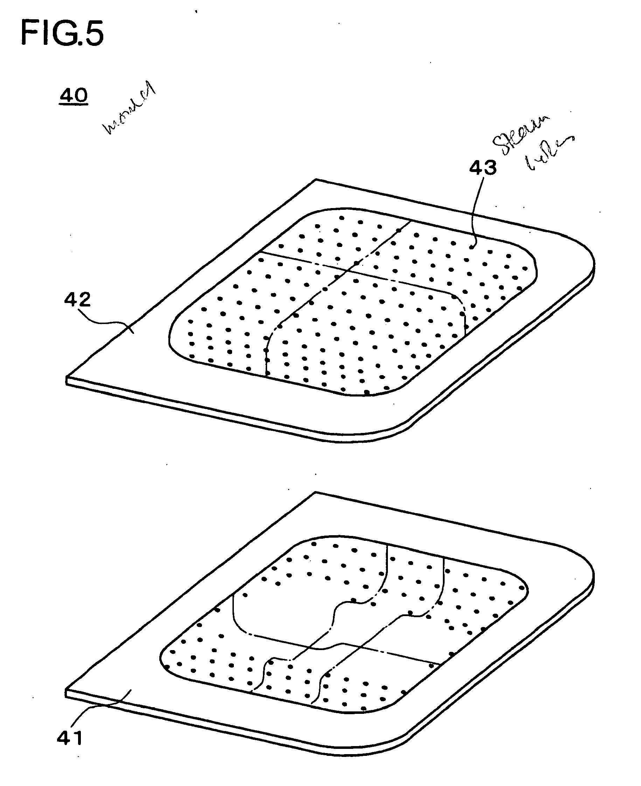

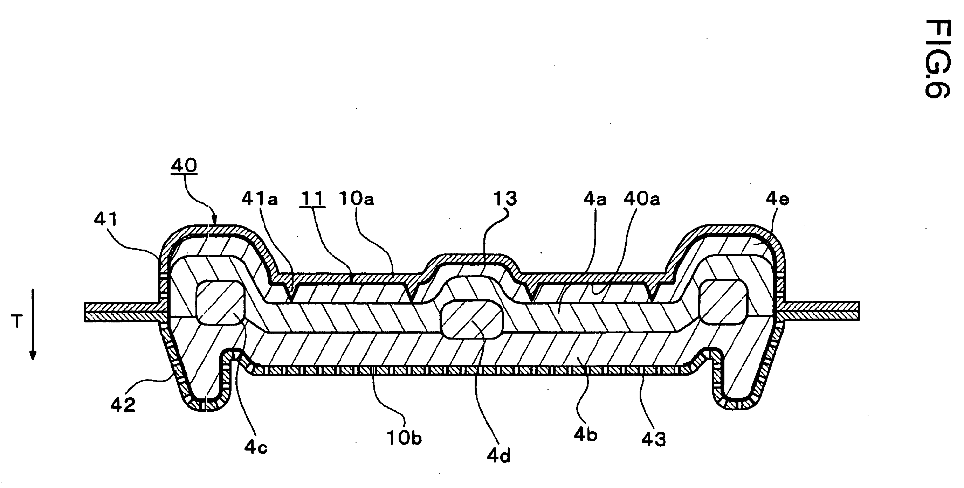

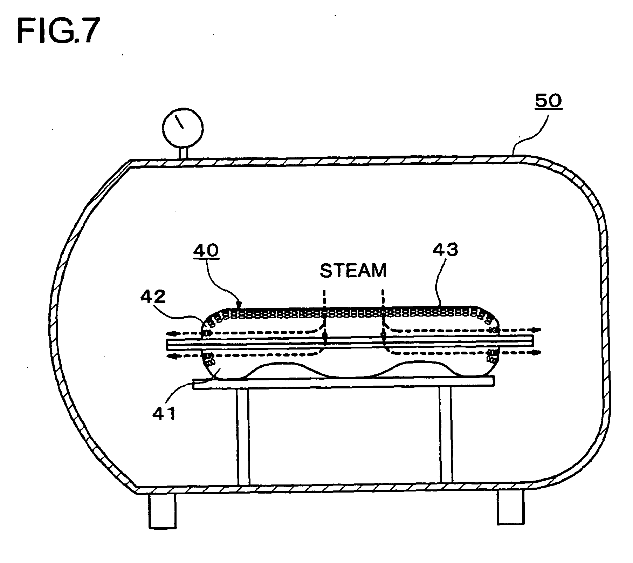

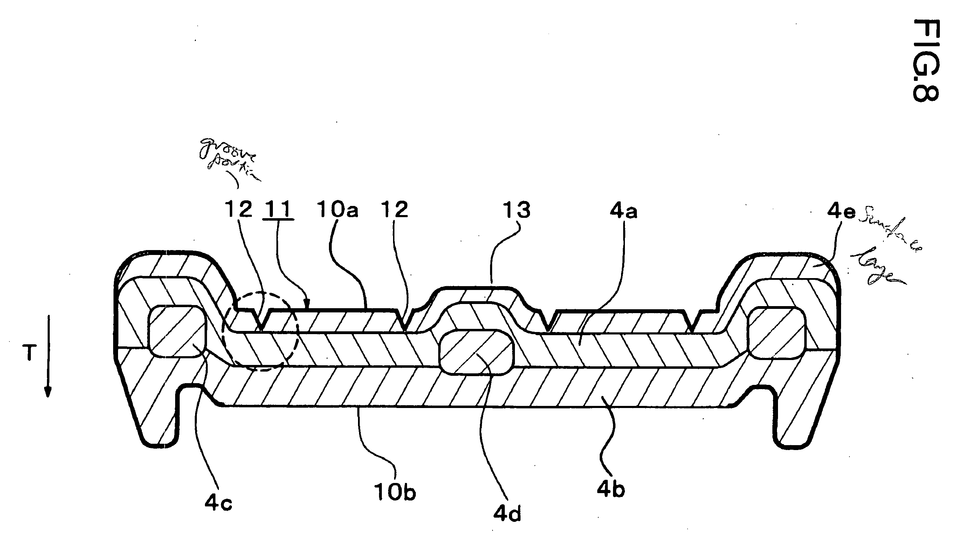

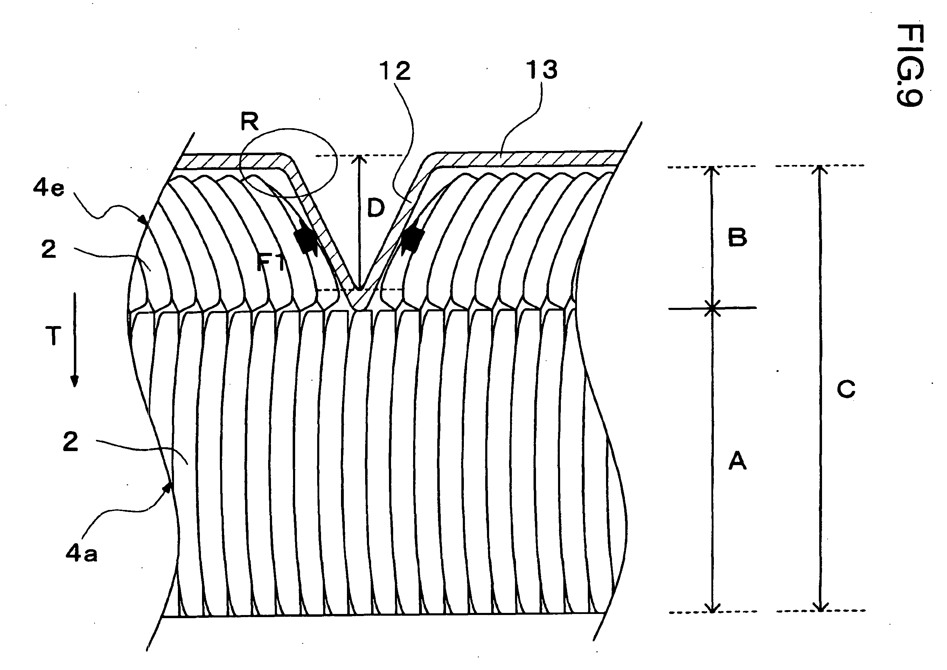

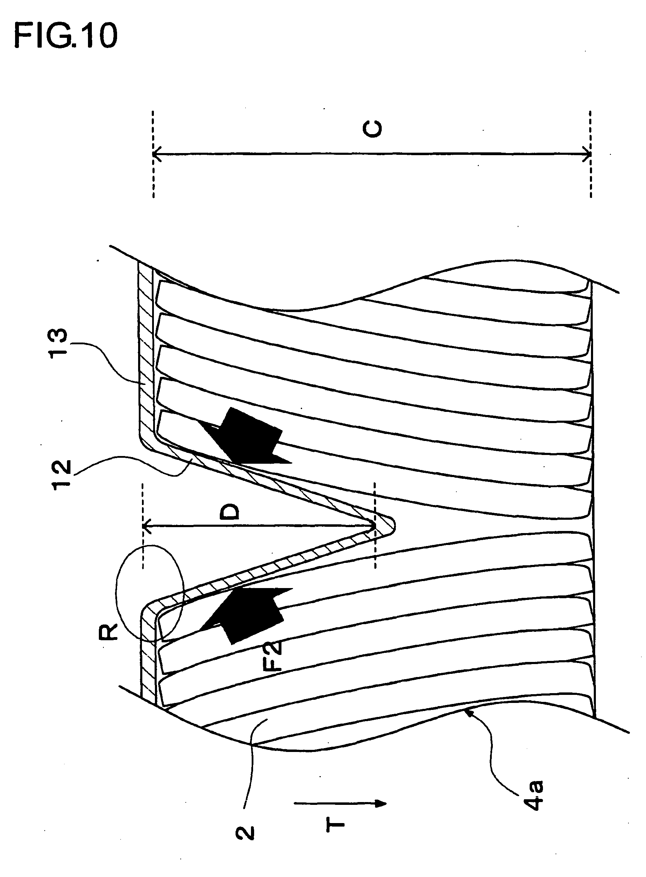

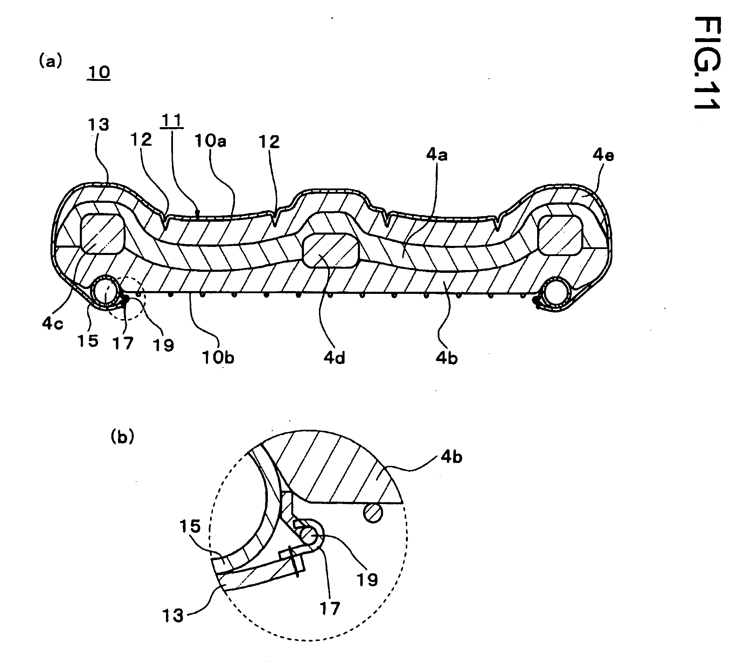

Fig. 1 to Fig. 8 show an embodiment of the present invention, Fig. 1 being an explanatory diagram of a seat, Fig. 2 being an explanatory diagram of a fiber direction in a web, Fig. 3 being an explanatory diagram of a manufacturing step of a sheet-like fibrous structure, Fig. 4 being an explanatory diagram of the sheet-like fibrous structure before stacked, Fig. 5 being an explanatory diagram of a mold, Fig. 6 and Fig. 7 being explanatory diagrams of a manufacturing step of a cushion body, Fig. 8 being sectional explanatory diagram of the cushion body, Fig. 9 being an explanatory diagram illustrating a region in a circle in Fig. 8 in an enlarged manner, and Fig. 11 being sectional views illustrating a state where a seat portion of a seat is cut in a widthwise direction. Also, Fig. 10 is an explanatory diagram illustrating a problem if a groove portion 12 is formed at a first sheet-like fibrous structure 4a without providing a surface layer fibrous structure 4e.

A seat 1 of the embodiment can be applied to a seat for a vehicle, a train, an airplane or the like, and it may be also applied to various chairs such as a business chair or a care chair. The seat 1 of this embodiment is provided with a seat portion 10 and a seat back portion 20, as shown in Fig. 1. The seat portion 10 and the seat back portion 20 are respectively constituted such that cushion bodies 11 and 21 are placed on seat frames 15 and 25 and the cushion bodies 11 and 21 are coated with covers 13 and 23.

Regarding the cushion body of this embodiment, a forming step (a cushion body forming step) thereof will be explained taking the cushion body 11 of the seat portion 10 as an example. The cushion body 21 is also formed according to a similar method as the above. The cushion body 11 in this embodiment is formed by forming a sheet-like fibrous structure as a fibrous structure where a web 2 has been folded in a standing state (a fibrous structure forming step) described later, cutting this sheet-like fibrous structure into fibrous structure pieces with predetermined shapes to stack a plurality of cut fibrous structure pieces and disposing the plurality of cut fibrous structure pieces in a mold 40 formed with a plurality of steam holes 43 which are ventilation holes on its mold face (a fibrous structure disposing step), and performing high pressure steam molding in high pressure steam molding machine 50 in a state the mold 40 has been clamped (a molding step).

First, the web 2 for forming the cushion body 11 of this embodiment will be explained with reference to Fig. 2 and Fig. 3. The web 2 is one obtained by dispersing and mixing, in matrix fibers composed of assemblies of inelastic crimped short fibers, thermally adhesive composite short fibers having a melting point lower than that of the inelastic crimped short fibers and having a melting point of at least 120°C as adhesive component.

The web 2 in this embodiment is one obtained by performing cotton blending of inelastic polyester crimped short fibers as the inelastic crimped short fibers and the thermally adhesive composite short fibers composed of thermoplastic elastomer having a melting point lower than a melting point of polyester polymer constituting the inelastic polyester crimped short fibers by 40°C and inelastic polyester such that the fibers are mainly directed in a longitudinal direction of the web 2. The web 2 of this embodiment has a bulk property of at least 30 kg/m³ and it is formed with cubic fiber crossing points between the thermally adhesive composite short fibers and between the thermally adhesive composite short fibers and the inelastic polyester crimped short fibers.

In this embodiment, hollow polyethylene terephthalate fiber with a single yarn fineness of 12 deniers and a fiber length of 64mm which have cubic crimp due to anisotropic cooling are used as the inelastic polyester crimped short fibers.

As the inelastic polyester crimped short fibers, short fibers made from ordinary polyethylene terephthalate, polytrimethylene terephthalate, polybutylene terephthalate, polyhexamethylene terephthalate, polytetramethylene terephthalate, poly-1, 4-dimethylcyclohexanee terephthalate, polypivalolactone, or copolymer ester thereof, cotton blended material of these fibers, composite fibers composed of two or more kinds of the above polymer components, or the like can be used. Short fibers of polyethylene terephthalate, polytrimethylene terephthalate, or polybutylene terephthalate of these short fibers are desirable. Further, potential crimped fibers composed of two kinds of polyethylene terephthalate and polytrimethylene terephthalate whose inherent viscosities are different from each other or a combination thereof, where crimps have micro-crimps due to heat treatment or the like can also be used.

Further, a sectional shape of the short fiber may be circular, oval, hyterotypic, or hollow. A thickness of this short fiber is in a range of 2 to 200 deniers, especially, preferably in a range of 6 to 100 deniers. Incidentally, when the thickness of the short fiber is small, softness increases, but elasticity of the cushion body often lowers.

Further, when the thickness of the short fiber is excessively thick, handling easiness, especially, formability of the web 2 deteriorates. Furthermore, there is a possibility that the number of constituent fibers decreases excessively, the number of crossing points formed between the short fibers and the thermally adhesive composite short fibers also decreases so that elasticity of the cushion body is hard to develop and simultaneously durability lowers. Furthermore, texture becomes excessively rough and hard.

In the embodiment, as the thermally adhesive composite short fibers, core/sheath type thermally melting composite fibers (a core/sheath ratio = 60/40: weight ratio) with a single yarn fineness of 6 deniers and a fiber length of 51mm which uses thermoplastic polyether ester elastomer with a melting point of 154°C as sheath component and uses polybutylene terephthalate with a melting point of 230°C as core component is used.

The thermally adhesive composite short fibers are composed of thermoplastic elastomer and inelastic polyester. Then, it is preferable that the former occupies at least 1/2 of a fiber surface. Regarding a weight ratio, it is appropriate that the former and the latter are in a range of 30/70 to 70/30 in a composite ratio. As an aspect of the thermally adhesive composite short fibers may be of a side by side type or of a sheath-core type, but the latter is desirable. In the sheath-core type, the inelastic polyester constitutes the core, but the core may be concentric or eccentric. Especially, the eccentric type is more desirable because coil-like elastic crimps are developed.

As the thermoplastic elastomer, polyurethane elastomer or polyester elastomer is desirable. Especially, the latter is appropriate. As the polyurethane elastomer, polyol with a low melting point having a molar weight of about 500 to 6000, for example, dihydroxy polyether, dihydroxy polyester, dihydroxy polycarbonate, dihydroxy polyester amide, or the like, organic diisocyanate with a molar weight of 500 or less, for example, p, p-diphenylmethane diisocyanate, tolylene diisocyanate, isophorone diisocyanate, diphenylmethane diisocyanate hydride, xylylene diisocyanate, 2, 6-diisocyanate methyl caproate, hexamethylene diisocyanate, or the like, chain extender with a molar weight of 500 or less, for example, polymer obtained by reaction with glycol, amino alcohol, or triol are used. An especially desirable one of these polymers is polytetramethylene glycol as polyol, or polyurethane using poly-ε-caprolactone or polybutylene adipate. In this case, p, p'-diphenylmethane diisocynate is desirable as organic diisocyanate. Further, p, p'-bidihydroxy-ethoxy benzene and 1, 4- butane diol are desirable as the chain extender.

On the other hand, as the polyester elastomer, polyether ester block copolymer obtained by performing copolymerization using thermoplastic polyester as hard segment and using poly (alkylene oxide) glycol as soft segment, more specifically, temary copolymer composed of at least one of dicarboxylic acids selected from aromatic dicarboxylic acid such as terephthalic acid, isophthalic acid, phthalic acid, naphthalene-2, 6-dicarboxylic acid, naphthalene-2, 7-dicarboxylic acid, diphenyl-4, 4'-dicarboxylic acid, diphenoxy-ethane dicarboxylic acid, or 3-sodium sulfoisophthalic acid, alicyclic dicarboxylic acid such as 1, 4-cyclohexane dicarboxylic acid, aliphatic dicarboxylic acid such as succinate, oxalic acid, adipic acid, sebacic acid dodecanedioic acid, dimer acid, ester-forming derivatives thereof, or the like; at least one of diol components selected from aliphatic diol such as 1, 4-butane diol, ethylene glycol, trimethylene glycol, tetramethylene glycol, pentamethylene glycol, hexamethylene glycol, neopentyl glycol, or decamethylene glycol, or alicyclic diol such as 1, 1- cyclohexan dimethanol, 1, 4 - cyclohexan dimethanol, or tricyclodecane dimethanol, ester-forming derivatives thereof, or the like; and at least one of poly (alkylene oxide) glycol such as polyethylene glycol, poly (1, 2 - and 1, 3 - propylene oxide) glycol, poly (tetramethylene oxide) glycol, copolymer of ethylene oxide and propylene oxide, copolymer of ethylene oxide and tetrahydrofuran, or the like, where an average molecular weight is in a range of about 400 to 5000 is used.

Considering aspect of adhesiveness with the inelastic polyester crimped short fibers, temperature property, strength, block copolymerization polyether polyester using polybutylene terephthalate as hard segment and using polyoxybutylene glycol as soft segment is desirable. In this case, the polyester component constituting the hard segment includes terephthalic acid as main acid component, and polybutylene terephthalate which is butylene glycol component as main diol component. Of course, a portion (generally, 30 mol% or less) of this acid component may be replaced with other dicarboxylic acid component or oxycarboxylic acid component, and similarly a portion (generally, 30 mol% or less) of glycol component may be replaced with dioxy component other than butylene glycol component.

Further, the polyether portion constituting the soft segment may be polyether replaced with dioxy component other than butylene glycol. Incidentally, various stabilizers, ultraviolet absorbent, thickening branching agent, delusterant, colorant, or other various improvers or the like may be blended in polymer according to necessity.

It is preferable that the degree of polymerization of polyester elastomer is in a range of 0.8 to 1.7 dl/g, especially, in a range of 0.9 to 1.5 dl/g regarding inherent viscosity. If this inherent viscosity is excessively low, a heat adhesion spot formed by the inelastic polyester crimped short fibers constituting the matrix is made breakable. On the other hand, if the inherent viscosity is excessively high, a spindle-shaped node becomes hard to be formed at a heat adhesion time.

As basic characteristics of the thermoplastic elastomer, a fracture elongation is preferably 500% or more, more preferably, 800% or more. If this elongation is excessively low, when the cushion body 11 is compressed and the deformation reaches the heat adhesion point, coupling at this portion becomes breakable.

On the other hand, an elongation stress of 300% of the thermoplastic elastomer is preferably 0.8 kg/mm² or less, more preferably, 0.8 kg/mm². If this stress is excessively large, it becomes hard for the heat-adhesion spot to disperse force applied on the cushion body 11, so that, when the cushion body 11 is compressed, the heat-adhesion spot may be broken by the force applied at that time, or even if it is not broken, the inelastic polyester crimped short fibers constituting the matrix may be also strained or crimps may fatigue.

Further, 300% elongation recovery ratio of thermoplastic elastomer is preferably 60% or more, more preferably, 70% or more. When this elongation recovery ratio is low, even if the cushion body 11 is compressed so that the heat-adhesion spot is deformed, recovery to its original state may become hard. It is required that these thermoplastic elastomers have melting points lower than polymer constituting the inelastic polyester crimped short fibers and they do not cause crimps of the crimped short fibers to thermally fatigue at a hot-melting processing time for forming the heat-adhesion spot. Therefore, the melting point is preferably lower than the melting point of the polymer constituting the short fibers by 40°C or more, more preferably, by 60°C or more. Such a melting point of the thermoplastic elastomer can be set to a temperature in a range of 120 to 220°C, for example.

When the difference in melting point is smaller than 40°C, a heat treatment temperature at a melting processing time described later is excessively high, fatigue of crimps of the inelastic polyester crimped short fibers is caused, which results in lowering of mechanical properties of the crimped short fibers. Incidentally, regarding the thermoplastic elastomer, when its melting point can not be observed clearly, a softening point thereof is observed instead of the melting point.

On the other hand, as the inelastic polyester crimped short fibers used as a mating component of the thermoplastic elastomer in the composite fibers, polyester polymers constituting the crimped short fibers forming the matrix, such as described above, are adopted, but polyethylene terephthalate, polymethylene terephthalate, or polybutylene terephthalate is more preferably adopted among them.

The above-described composite fibers are dispersed and blended in a range of 20 to 100%, preferably, 30 to 80% based upon weight of the web 2.

In the web 2 in this embodiment, the thermally adhesive composite short fibers as the binder fibers and the inelastic crimped short fibers as the main fibers are cotton-blended at a weight ratio of 60: 40.

When the dispersion and blend ratio of the composite fibers is excessively low, the number of heat-adhesion spots is reduced, so that the cushion body 11 may become easily deformable, or elasticity, repulsive property, and durability may lower. Further, cracks between tops arranged may occur.

In the embodiment, the inelastic polyester crimped short fibers and the thermally adhesive composite short fibers are cotton-blended at the weight ratio of 40: 60, and they are formed in the web 2 of coating weight 20 g/m² through a roller card.

The web 2 in this embodiment is formed such that a ratio of fibers oriented in the lengthwise direction of the web is relatively higher than that of fibers oriented in a lateral direction. That is, the web 2 in this embodiment is formed so as to satisfy a relationship of C≥3D/2, preferably, C≥2D per unit volume.

When total numbers of the fibers C oriented in the lengthwise direction (a continuous direction) in this continuous web 2 and the fibers D oriented in the lateral direction (a widthwise direction of the web) are examined. It can be confirmed that C: D = 2: 1.

Here, as shown in Fig. 2, the fibers oriented in the lengthwise direction of the web 2 are fibers satisfying such a condition that an angle θ of the lengthwise direction of the fibers to the lengthwise direction of the web is in a range of 0°≤θ≤45°, while the fibers oriented in the lateral direction (the widthwise direction of the web) are fibers satisfying such a condition that the angle θ is in a range of 45°<θ≤90°. In the figure, reference symbol a represents fibers constituting the web, reference symbol b represents the lengthwise direction (extending direction) of the web, and reference symbol c represents the fiber direction constituting the web.

Further, regarding the orientation of the fibers constituting the sheet-like fibrous structure, a thickness direction of the sheet-like fibrous structure and a direction extending along a direction perpendicular to a thickness direction thereof means directions within a range of ± 45° to these directions.

A direction where each fiber directs can be confirmed by extracting random portions in a surface layer portion and an inner layer portion of the web 2 to observe them using a transmission type optical microscope.

Incidentally, the thickness of the web 2 is 5mm or more, preferably, 10mm or more, further preferably 20 mm or more. Generally, the web 2 has a thickness of 5 to 150 mm.

Next, the web 2 formed such that fibers mainly extend along the lengthwise direction is folded like an accordion such that it has a predetermined density and a desired thickness as a structural body, so that cubic fiber crossing points are formed between the composite fibers and between the inelastic polyester crimped short fiber and the composite fibers, and heat treatment is then performed at a temperature (to 80°C) lower than the melting point of the polyester polymer and higher than the melting point (or a fluidization start point) of the thermoplastic elastomer, so that elastomer component are melt-adhered at the fiber crossing points and flexible heat-adhesion spots are formed.

Specifically, as shown in Fig. 3, the web 2 is folded to an accordion shape by pushing the web 2 into a hot-air suction type heat treatment machine 62 (a length of a heat treatment zone is 5 m and a moving velocity is 1m/min) by a driving roller 61 with a roller surface velocity of 2.5 m/min and it is formed in a heat-adhered sheet-like fibrous structure with a thickness of 25mm by treating the web 2 at 190°C for 5 minutes using Struto equipment.

Adhesion spots thermally adhering in a state the thermally adhesive composite short fibers have crossed one another and adhesion spots thermally adhering in a state that the thermally adhesive composite short fibers and the inelastic crimped short fibers have crossed one another are dispersed in the sheet-like fibrous structure thus formed.

It is appropriate for developing cushioning properties, ventilation properties, and elasticity that the density of the sheet-like fibrous structure is in a range of 5 to 200 kg/m³.

By forming the web 2 formed such that their fibers extend along the lengthwise direction in a folding manner, the sheet-like fibrous structure is formed such that the number of fibers oriented in the thickness direction is larger than that of fibers oriented in a direction perpendicular to this thickness direction and a direction of the fibers mainly becomes parallel to the thickness direction. That is, the sheet-like fibrous structure in the embodiment is formed such that when the total number of fibers arranged along in the thickness direction is represented as A and the number of fibers arranged along the direction perpendicular to the thickness direction is represented as B regarding per unit volume, a relationship of A≥3B/2, preferably, A≥2B is satisfied.

Next, the sheet-like fibrous structure is cut in a predetermined shape, and cut pieces are stacked in a vertical direction (a thickness direction T), as shown in Fig. 4. In this embodiment, five kinds of sheet-like fibrous structures 4a to 4e of a first sheet-like fibrous structure 4a, a second sheet-like fibrous structure 4b, a U-shaped sheet-like fibrous structure 4c with a U shape for forming a bank portion of the cushion body 11, a protrusion-shaped sheet-like fibrous structure 4d for forming a protrusion portion to be slightly protruded between both thighs of a seat occupant, and a surface layer sheet-like fibrous structure 4e disposed in a surface layer are respectively cut in predetermined shapes, the U-shaped sheet-like fibrous structure 4c and the protrusion-shaped sheet-like fibrous structure 4d are sandwiched between the first sheet-like fibrous structure 4a and the second sheet-like fibrous structure 4b.

The surface layer sheet-like fibrous structure 4e is disposed in the surface of the first sheet-like fibrous structure 4a, and its surface is covered by a cover 13.

Incidentally, a widthwise direction of the cushion body 11, a lengthwise direction thereof, and a thickness direction thereof are represented as W, L, and T in Fig. 4, respectively.

In this embodiment, the first sheet-like fibrous structure 4a and the second sheet-like fibrous structure 4b having equivalent fiber material and fiber density to those of the first sheet-like fibrous structure 4a are stacked on its lower face and the surface layer sheet-like fibrous structure 4e on the upper face. It is preferable that the fiber density of the first sheet-like fibrous structure 4a, the second sheet-like fibrous structure 4b, and the surface layer sheet-like fibrous structure 4e is in a range of 5 to 35 kg/m³ before thermal molding.

Incidentally, the first sheet-like fibrous structure 4a, the second sheet-like fibrous structure 4b, and the surface layer sheet-like fibrous structure 4e correspond to the fibrous structure of the present invention.

As described above, the first sheet-like fibrous structure 4a is formed of a sheet-like fibrous structure obtained by folding the web 2 obtained by blending the main fibers and the binder fibers in a standing state. The first sheet-like fibrous structure 4a is arranged on a side (an upper side on Fig. 4) of a sitting surface 10a of the seat 1, and it serves to receive load from a body of a seat occupant directly or indirectly via a cover.

Incidentally, a thickness of the first sheet-like (fibrous structure 4a may be a desired thickness according to the shape of the cushion body 11. It is set at a desired thickness in a range of approximately 10 to 40 mm, for example.

The second sheet-like fibrous structure 4b is formed of a sheet-like fibrous structure made from substantially the same fiber material as that of the first sheet-like fibrous structure 4a. The second sheet-like fibrous structure 4b is arranged on the side (a lower side on Fig. 4) of the seat frame 15 of the seat 1. A thickness of the second sheet-like fibrous structure 4b may be also a desired thickness similarly to the first sheet-like fibrous structure 4a.

The surface layer sheet-like fibrous structure 4e is also formed of a sheet-like fibrous structure made from substantially the same fibrous material as that of the first sheet-like fibrous structure 4a. The surface layer sheet-like fibrous structure 4e is disposed on an upper face of the first sheet-like fibrous structure 4a.

A thickness of the surface layer sheet-like fibrous structure 4e is substantially equal to or smaller than a depth of a groove portion 12 formed at the cushion body 11 after thermal molding, which will be described later. Specifically, it has a thickness of approximately 2 to 20 mm, for example.

Between the first sheet-like fibrous structure 4a and the second sheet-like fibrous structure 4b, the U-shaped sheet-like fibrous structure 4c and the protrusion-shaped sheet-like fibrous structure 4d are disposed. The U-shaped sheet-like fibrous structure 4c is a fibrous structure for forming a bank portion of the cushion body 11, and the protrusion-shaped sheet-like fibrous structure 4d is a fibrous structure for forming a protrusion portion of the cushion body 11, which will be described later.

These sheet-like fibrous structures 4a to 4e are stacked in their thickness direction T. That is, stacking is performed such that a direction of fibers extends in a vertical direction. Moreover, the surface of the surface layer sheet-like fibrous structure 4e is covered by the cover 13.

Further, holt-melt films, hot-melt unwoven cloths, hot-melt adhesives, or the like are arranged at portions where the sheet-like fibrous structures 4a to 4e abut on one another or at a portion where the surface layer sheet-like fibrous structure 4e and the cover 13 abut on one another according to necessity.

In this embodiment, an example in which the sheet-like fibrous structures 4a to 4e constituting the cushion body 11 and the cover 13 are disposed in the mold 40, which will be described later, and integrally molded is illustrated, but the cover 13 may be affixed on the surface of the molded cushion body 11 using an adhesive and the like after only the cushion body 11 is molded in the mold.

The sheet-like fibrous structures 4a to 4e and the cover 13 thus stacked are arranged in a mold 40 such as shown in Fig. 5 and compressed (a fibrous structure arranging step). The mold 40 of this embodiment is composed of a first mold 41 and a second mold 42. The first mold 41 is a mold used to form a shape of the cushion body 11 positioned on the side of the sitting surface 10a (namely, a surface), while the second mold 42 is a mold used to form a shape of the cushion body 11 positioned on the side of the seat frame 15, namely, on the side of a back surface 10b (a non-load receiving face).

When the first mold 41 and the second mold 42 are fastened, a cavity 40a having a desired undulation shape of the cushion body 11 is formed. Further, steam holes 43 are formed on a portion or a whole of a mold face of the mold 40. In the embodiment, the steam holes are hardly formed on the first mold 41 while a plurality of steam holes 43 are bored over a whole face of the second mold 42 in the second mold 42.

The mold 40 can be formed using such metal as iron, steel, aluminum, glass fiber, or carbon fiber, or it may be formed of any synthetic resin.

Fig. 6 is a sectional view of a state that the sheet like fibrous structures 4a to 4e have been disposed in the mold 40 and the mold 40 has been fastened. The sheet-like fibrous structures 4a to 4e are formed to be larger than the cavity 40a of the mold 40 in a natural state by about 1.2 to 3.0 times in volume. Accordingly, the sheet-like fibrous structures 4a to 4e are changed to a state that they have been compressed to the shape of the cavity 40a at a mold fastening time.

The surface layer sheet-like fibrous structure 4e is accommodated in the cavity 40a so that its upper face is brought into contact with an inner wall surface of the first mold 41 and its lower face with the upper face of the first sheet-like fibrous structure 4a. The second sheet-like fibrous structure 4b is arranged within the cavity 40a so that its upper face is brought into contact with the lower face of the first sheet-like fibrous structure 4a and its lower face with the inner wall surface of the second mold 42.

The U-shaped sheet-like fibrous structure 4c and the protrusion-shaped sheet-like fibrous structure 4d are disposed between the first sheet-like fibrous structure 4a and the second sheet-like fibrous structure 4b.

On the inner wall surface of the first mold 41, a groove formation portion 41a protruding in the V-shape into the cavity 40a s formed. The groove formation portion 41a is for forming the groove portion 12 of the seat portion 10, and by disposing the sheet-like fibrous structures 4a to 4e and the cover 13 in the cavity 40a and fastening the mold, a region in contact with the groove formation portion 41a among the cover 13 and the surface layer sheet-like fibrous structure 4e is pushed into the inside direction of the cavity 40a. In this embodiment, the groove formation portion 41a is in a shape protruding in the V-shape, and the formed groove portion 12 is in the V-shape, but by using another shape such as a shape protruding in the U-shape, for example, the formed groove portion 12 may be in the U-shape.

Next, as shown in Fig. 7, the mold 40 in which the sheet-like fibrous structures 4a to 4e and the cover 13 have been disposed is entered into a high pressure steam molding machine 50. A steam introducing port (not shown) is formed on an upper portion of the high pressure steam molding machine 50, so that high pressure steam can be introduced from the outside of the high pressure steam molding machine 50 into the high pressure steam molding machine 50.

The mold 40 is installed in the high pressure steam molding machine 50 such that the second mold 42 is directed vertically upwardly and the first mold 41 is directed vertically downwardly. After steam is blown to the mold 40, cooling and mold-releasing are performed to obtain a cushion body 11 (cooling and mold-releasing step).

In the molding step of this embodiment, a temperature inside the high pressure steam molding machine 50 is controlled such that steam with a molding temperature can be blown to the molding 40.

Here, the molding temperature is a temperature higher than a melting point of the thermally adhesive composite short fibers serving as the binder fibers, namely, higher than a melting point of thermoplastic elastomer, and lower than a melting point of matrix fibers (the inelastic crimped short fibers) serving as the main fibers.

In order to raise a temperature of steam to the molding temperature, a temperature inside the high pressure steam molding machine 50 is first raised to the molding temperature by a heater (not shown) and a pressure inside the high pressure steam molding machine 50 is raised from an ambient atmospheric pressure (about 1 atm) to at least saturated steam pressure of steam or higher in the molding temperature.

In this embodiment, since the melting point of the binder fibers is about 154°C, the molding temperature is set to 161°C higher than the melting point. In this embodiment, then, since water vapor (H₂O) serving as heat conduction material is blown to the mold 40, the temperature inside the high pressure steam molding machine 50 is raised up to the molding temperature of 161°C in about 30 seconds and the pressure inside the high pressure steam molding machine 50 is raised to atmospheric pressure of about 5.5 atm (about 0.557 MPa) which is a boiling point at the molding temperature of 161°C. That is, the saturated steam pressure at the molding temperature of 161°C is about 5.5 atm.

In the molding step, water vapor with the molding temperature is blown to the mold 40 in a state that the temperature and the pressure inside the high pressure steam molding machine 50 have been kept in the molding temperature and a predetermined pressure. In this embodiment, molding is performed by blowing steam to the mold 40 for about one minute and 10 seconds.

Thereafter, the temperature inside the high pressure steam molding machine 50 is lowered to the molding temperature or lower in about one minute and the pressure inside the high pressure steam molding machine 50 is reduced to an ambient atmospheric pressure. Then, the mold 40 is taken out of the high pressure steam molding machine 50 to be cooled (a cooling step), and the cushion body 11 thermally molded is released from the mold 40 (a mold-releasing step).

In this embodiment, tact time for thermally molding the cushion body 11 in the high pressure steam molding machine 50 can be set to about 3 to 5 minutes.

By blowing steam with the molding temperature to the mold in this manner, steam enters in the sheet-like fibrous structures 4a to 4e having ventilation properties from steam holes 43 of the mold 40, and it exits from other steam holes 43 to the outside of the mold 40. The sheet-like fibrous structures 4a to 4e are disposed in the mold 40 in their compressed state, and crossing points between the thermally adhesive composite short fibers and between the thermally adhesive composite short fibers and the inelastic crimped short fibers are caused to thermally adhere to one another due to steam heat so that the cushion body is formed in the shape of the cavity 40a of the mold 40.

Since the region in the cover 13 and the surface layer sheet-like fibrous structure 4e brought into contact with the groove formation portion 41a of the first mold 41 is pushed into the inside direction of the cavity 40a, when thermal molding is carried out in this state, the groove portion 12 in the shape corresponding to the shape of the groove formation portion 41a is formed in the surface layer of the cushion body 11 after cooling.

Further, hot-melt films, hot-melt unwoven clothes, hot-melt adhesives, or the like disposed among the sheet-like fibrous structures 4a to 4e as well as between the surface layer sheet-like fibrous structure 4e and the cover 13 are melted due to steam heat and the sheet-like fibrous structures 4a to 4e as well as between the surface layer sheet-like fibrous structure 4e and the cover 13 are fixed to one another.

Thus, fibers in the sheet-like fibrous structures 4a to 4e are caused to thermally adhere to one another due to steam and the sheet-like fibrous structures 4a to 4e as well as between the surface layer sheet-like fibrous structure 4e and the cover 13 are fixed to one another by the hot-melt film, a hot-melt unwoven cloth, hot-melt adhesive, or the like; so that a cushion body 11 with a predetermined shape is formed. Incidentally, dish cloth may be inserted on a surface according to necessity, or wires made from steel or the like may be inserted among the sheet-like fibrous structures 4a to 4e as well as between the surface layer sheet-like fibrous structure 4e and the cover 13.

When steam with the molding temperature is blown to the mold 40 inside the high pressure steam molding machine 50 raised up to the saturated steam pressure like this embodiment, a molding time can be reduced largely. That is, since steam with the molding temperature has a thermal capacity larger than that of hot air, the binder fibers can be melted in a short time.

Incidentally, when high pressure steam is blown to the mold under atmospheric pressure, since the high pressure steam adiabatically expands immediately and a temperature of the steam lowers, it is difficult to cause steam with the molding temperature to reach inside of the fiber bodies. Therefore, a long molding time is required notwithstanding.

Further, in this embodiment, by shortening the molding time largely, a time when fibers are exposed to heat is shortened so that texture of the cushion body 11 molded is made excellent.

In The cushion body 11 in this embodiment, the sheet-like fibrous structures 4a to 4e where the directions of fibers are oriented in the thickness direction T are stacked and the high pressure steam molding is performed. Accordingly, the fibers constituting the cushion body 11 are arranged along a direction in which load acts when a seat occupant sits on the seat 1. With such a constitution, the cushion body 11 in this embodiment has ventilation properties and can secure a proper hardness to a stress direction, and it provides dispersibility of stress and excellent durability.

Further, the cushion body 11 in this embodiment is molded in a state that it has been compressed by the mold 40; and it can take a three-dimensional and complicated undulation shape so as to conform with the shape of the cavity 40a of the mold 40. At this time, cushioning feeling can be adjusted partially according to a compression degree in the mold 40.

The mold 40 in this embodiment is arranged such that the second mold 42 is oriented vertically upwardly, namely, to the side of the steam introducing port. Further, formation is made such that the steam holes 43 of the second mold 42 outnumbers the steam holes 43 of the first mold 41. Therefore, an amount of steam introduced from the steam holes 43 of the second mold 42 into the cavity 40a is more than the amount of steam introduced from the steam holes 43 of the first mold 41.

The steam introduced from the steam holes 43 of the second mold 42 is exhausted from the inside of the cavity 40a through the steam holes formed on a side face of the second mold 42 or the steam holes formed on a side face of the first mold 41. A flow of this steam is indicated by dotted arrows in Fig. 7.

Incidentally, in the mold 40 of this embodiment, any steam hole is not formed in a region of the first mold 41 corresponding to the sitting surface 10a. Thereby, it is made possible to reduce the hardness of the sitting surface 10a to provide soft touch feeling to a seat occupant, as described later.

In this embodiment, since the amount of steam introduced from the second mold 42 is more than the amount of steam introduced from the first mold 41, a heat amount supplied to the second sheet-like fibrous structure 4b disposed on the side of the second mold 42 is more than a heat amount supplied to the first sheet-like fibrous structure 4a disposed on the side of the first mold 41. When the heat amount to be supplied is large, fibers are melted in a short time by the thermal molding and many fibers are fixed due to heat adhesion so that hardness becomes high.

On the other hand, steam holes are hardly formed in the first mold 41 at all, and the introduced steam amount is small. Especially, any steam hole is not formed on a region corresponding to the sitting surface. Therefore, the heat amount supplied to the first sheet-like fibrous structure 4a is small, and especially, temperature rising in a region corresponding to the sitting surface becomes very slow. Thus, since the number of fibers fixed by the heat adhesion is reduced in the first sheet-like fibrous structure 4a, hardness becomes low.

As mentioned above, the first sheet-like fibrous structure 4a disposed on the side of the sitting surface 10a becomes lower in hardness of the entire fibrous structure, particularly on surface layer hardness, than the second sheet-like fibrous structure 4b, and a flexing degree of the former in the thickness direction T to a load due to sitting of a seat occupant becomes large.

On the other hand, since the second sheet-like fibrous structure 4b becomes higher in hardness than the first sheet-like fibrous structure 4a, durability to weight in the thickness direction T due to sitting can be improved.

Thus, according to the cushion body molding step of this embodiment, a cushion body 11 including both soft touch feeling during sitting and durability to load due to sitting can be provided.

Fig. 8 is a sectional view of a seat portion 10 released from the mold. Fig. 8 shows a sectional shape obtained by cutting the seat portion 10 of the seat 1 shown in Fig. 1 along a direction of arrow line A-A'.

As shown in this figure, the seat portion 10 in this embodiment is formed by the cushion body 11 and the cover 13 affixed thereto. The cushion body 11 is the one thermally molded in a state that the first sheet-like fibrous structure 4a, the second sheet-like fibrous structure 4b, the U-shaped sheet-like fibrous structure 4c with a U shape for forming a bank portion of the cushion body 11, the protrusion-shaped sheet-like fibrous structure 4d for forming a protrusion portion to be slightly protruded between both thighs of a seat occupant, and the surface layer sheet-like fibrous structure 4e have been stacked in the thickness direction T. Each of the sheet-like fibrous structures 4a to 4e as well as the surface layer sheet-like fibrous structure 4e and the cover 13 are bonded to each other by hot-melt and the like.

In this embodiment, the fiber density of the first sheet-like fibrous structure 4a, the second sheet-like fibrous structure 4b, and the surface layer sheet-like fibrous structure 4e after being thermally molded is in a range of about 5 to 35 kg/m³.

Since these sheet-like fibrous structures 4a, 4b, 4e have a structure where the number of gaps among fibers is large, they are compressed in the thickness direction T and largely flexed when applied with the load in the thickness direction T. Thus, the cushion body 11 of this embodiment can give soft touch feeling to a seat occupant when sitting.

The U-shaped sheet-like fibrous structure 4c is disposed between the first sheet-like fibrous structure 4a and the second sheet-like fibrous structure 4b. The U-shaped sheet-like fibrous structure 4c in this embodiment is formed from approximately the same material as that for the first sheet-like fibrous structure 4a or the second sheet-like fibrous structure 4b.

Further, the protrusion-shaped sheet-like fibrous structure 4d is similarly disposed between the first sheet-like fibrous structure 4a and the second sheet-like fibrous structure 4b. The protrusion-shaped sheet-like (fibrous structure 4d is also formed from approximately the same material as that for the first sheet-like fibrous structure 4a or the second sheet-like fibrous structure 4b.

Incidentally, in the cushion body 11 in this embodiment, the bank portion and the protrusion portion are formed using the U-shaped sheet-like fibrous structure 4c and the protrusion-shaped sheet-like fibrous structure 4d, but the bank portion or the protrusion portion may be formed utilizing the shape of the cavity 40a without using these sheet-like fibrous structures.

These sheet-like fibrous structures 4a to 4e are all formed by the same fiber material. Therefore, when the cushion body 11 is discarded due to damage of the cushion body 11 or duration of life, separation thereof by material can be saved, so that recycling easiness is improved.

As shown in Fig. 8, the groove portion 12 is formed in the surface layer of the cushion body 11. Fig. 9 is an explanatory diagram illustrating the periphery of the groove portion 12 in Fig. 8 in an enlarged manner. On the other hand, Fig. 10 is an explanatory diagram illustrating a problem when the groove portion 12 is formed at the first sheet-like fibrous structure 4a without providing the surface layer sheet-like fibrous structure 4e. Using Figs. 9 and 10, an advantageous effect when the groove portion 12 is formed using the surface layer sheet-like fibrous structure 4e with a small thickness characterizing the present invention will be described.

In Fig. 9, a thickness of the first sheet-like fibrous structure 4a is indicated by A, a thickness of the surface layer sheet-like fibrous structure 4e by B, a total thickness of the first sheet-like fibrous structure 4a and the surface layer sheet-like fibrous structure 4e by C, and a depth of the groove portion 12 by D. Each of the sheet-like fibrous structures 4a to 4e is formed by folding the web 2 in an accordion shape as mentioned above, and the number of fibers aligned along the thickness direction T is large.

The thickness B of the surface layer sheet-like fibrous structure 4e is substantially equal to or smaller than the depth D of the groove portion 12. In this embodiment, the thickness B of the surface layer sheet-like fibrous structure 4e is substantially the same as the depth D of the groove portion 12. However, the thickness B of the surface layer sheet-like fibrous structure 4e may be smaller than the depth D of the groove portion 12.

In this embodiment, the thickness substantially equal to or smaller than the depth of the groove portion 12 specifically means the thickness of approximately 50 to 110% of the depth of the groove portion 12.

If the thickness of the surface layer sheet-like fibrous structure 4e is larger than 110% of the depth of the groove portion 12, as will be described in Fig. 10, later, a force of the web 2 to return in the direction along the thickness direction becomes large, and shape reproduction of the groove portion 12 becomes difficult. On the other hand, if it is smaller than 50%, since the depth of the groove portion 12 becomes considerably deeper than the thickness of the surface layer sheet-like fibrous structure 4e, the web 2 is strongly pulled in the widthwise direction (right and left direction in the figure) on a base portion of the groove portion 12. Thus, the web 2 of the surface layer sheet-like fibrous structure 4e becomes to be easily broken on the base portion, which is not preferable.

As mentioned above, since the thickness B of the surface layer sheet-like fibrous structure 4e is substantially equal to or smaller than the depth D of the groove portion 12, when accommodated in the mold 40 in a compressed state, the web 2 standing in the surface layer of the surface layer sheet-like fibrous structure 4e is pushed open into the depth in the thickness direction. If thermal molding is carried out in this state and the groove portion 12 is formed, since the web 2 is pushed open to the deep region in the thickness direction, a force of the web 2 to return in the direction along the thickness direction (this force is indicated by F1 in the figure) becomes small. Thus, the R-shape of the formed groove portion 12 (region in an oval shown by R in the figure) is hard to slack or the V-shape of the groove portion 12 is hard to sag. Therefore, the shape reproduction of the groove portion 12 formed in the surface layer of the cushion body 11 becomes favorable.

On the other hand, Fig. 10 shows the cushion body 11 in which the groove portion 12 is formed in the first sheet-like fibrous structure 4a thicker than the surface layer sheet-like fibrous structure 4e without providing it. In this case, too, the groove portion 12 is formed in a state where the web 2 standing in the surface layer of the cushion body 11 is pushed open similarly to Fig. 9, but since the thickness of the first sheet-like fibrous structure 4a is large, the web 2 in the surface layer is not fully pushed open and particularly in a region on a lower side of the thickness direction, most of the fibers are standing upright in the thickness direction. Even if the groove portion 12 is formed by thermal molding in this state, since the web 2 is hardly pushed open in the widthwise direction in a region on the lower part of the thickness direction, the force to return in the direction along the thickness direction (this force is indicated by F2 in this figure) acts on the web 2, and thus, the R-shape of the formed groove portion 12 (region in an oval indicated by R in the figure) slacks or the V-shape of the groove portion 12 sags, which is a problem. Accordingly, the shape reproduction of the groove portion 12 formed in the surface layer of the cushion body 11 becomes difficult.

As mentioned above, by providing the surface layer sheet-like fibrous structure 4e with the thickness substantially equal to or smaller than the depth of the groove portion 12, the shape reproduction of the groove portion 12 becomes favorable.

Though the cushion body 11 has been explained above, a cushion body 21 for the seat back portion may be similarly formed. Regarding the cushion body 21, a direction in which load acts when a seat occupant sits is a thickness direction of the cushion 21. Accordingly, in order to secure dispersibility of hardness or stress and durability in a stress direction, a three-dimensional shape can be achieved by stacking sheet-like fibrous structures in a direction in which stress acts and performing high pressure steam forming within the mold 40. Then, a seat 1 is formed by arranging the cushion bodies 11 and 21 thus formed on the sheet frames 15 and 25 and coating them with covers 13 and 23 (an assembling step).

Incidentally, when the cushion body 11 is formed, the cover 13, and the sheet-like fibrous structures 4a to 4e are stacked via hot-melt films, hot-melt unwoven clothes, hot-melt adhesives, or the like, and they are disposed in the mold 40, so that high pressure steam forming may be performed. Thereby, the cover 13 can be formed integrally with the cushion body 11. The cover 23 may be similarly handled.

If the high pressure steam molding is performed in a state that the sheet-like fibrous structures 4a to 4e are coated with the cover 13, the sheet-like fibrous structures 4a to 4d and the cover 13 are arranged in the mold 40, when the molding temperature is excessively high, the cover 13 may lose color. In this case, therefore, the molding temperature may be set to be lower than the melting temperature of dye dyeing the cover 13.

Further, in the above embodiment, water vapor is blown to the mold 40, but the present invention is not limited to this treatment and heat conducting material which does not adversely affect fibers can be used. That is, steam of the selected heat conducting material can be blown to the mold 40 by raising pressure in the high pressure steam molding machine 50 such that a desired temperature is a boiling point of the selected heat conducting material.

Furthermore, in the embodiment, the cushion body 11 is formed using the sheet-like fibrous structures 4a to 4e formed by folding the web 2 in an accordion shape as the fibrous structures, but the present invention is not limited to this constitution, and a fibrous structure obtained by stacking many webs 2 in the thickness direction can be used as the fibrous structure, or a raw fiber assembly obtained by dispersing and blending main fibers and binder fibers may be used.

Furthermore, in the embodiment, the cushion bodies 11 and 21 obtained by stacking the sheet-like fibrous structures 4a to 4e to perform the high pressure steam forming are used for the seat portion 10 and the seat back portion 20, but the present invention is not limited to this constitution, and a cushion body obtained by stacking sheet-like fibrous structures 4a to 4e to perform high pressure steam forming may be used at a portion on which load due to seat occupant sitting acts such as an arm rest or a head rest.

Next, details of a seat using the cushion body 11 will be explained. Fig. 11 is sectional views showing a state that a seat portion of a seat has been cut in a widthwise direction, Fig. 11 (a) being a view showing the whole of the seat portion, and Fig. 11 (b) being a view showing a region circled in Fig. 11 (a) in an enlarged manner.

As shown in Fig. 11 (a), the seat portion 10 includes a cushion body 11, the cover 13, and a seat frame 15. As shown in Fig. 11 (b), a surface of the cushion body 11 is coated with the cover 13, and a trim cord 17 made from resin is sewn to an end portion of the cover 13. The trim cord 17 is formed to have an about J shape in section, and a member such as a string can be hooked on a bent portion formed at a distal end of the trim cord 17.

On the other hand, an engagement portion 19 is provided inside the seat frame 15 in a projecting manner. A wire is provided on the side of a distal end of the engagement portion 19. The cover 13 can be fixed to the seat frame 15 by hooking the bent portion of the trim cord 17 on the wire of the engagement portion 19.

Next, a method for manufacturing a seat portion 10 of a seat for a vehicle will be explained in detail.

First, a hot-melt film is caused to adhere to a surface of the cushion body 11 before the high pressure steam forming, and the surface is coated with the cover 13. Next, the cushion body 11 whose surface is coated with the cover 13 is introduced into a high pressure steam molding machine, wherein high pressure steam molding is performed so that the cushion body 11 and the cover 13 are formed integrally.

The molded cushion body 11 is taken out of the high pressure steam molding machine, and it is left for a while to be dried. After dried, the trim cord 17 made from resin is sewn on the end portion of the cover 13. Next, winkles of a surface of the seat portion 10 are removed by pulling the end portion of the cover 13 and the trim cord 17 is hooked to the engagement portion 19.

The above is directed to explanation about the seat portion 10 of the seat 1, but the seat back portion 20 can also be manufactured according to similar steps.

## Claims

1. A cushion body (11) obtained by molding a fibrous structure obtained by mixing main fibers and binder fibers using a mold (40) having a cavity (40a) with a predetermined shape, wherein the cushion body (11) is formed by stacking a plurality of the fibrous structures (4a, 4b, 4c, 4d, 4e) and groove portions (12) are formed in a surface layer in a recess state in a thickness direction of the fibrous structures;
the fibrous structure is formed by stacking a web (2) composed of a mixture of the main fibers and the binder fibers so that the web (2) extends along the thickness direction of the fibrous structure; and
the fibrous structure (4e) stacked in the surface layer has a thickness substantially equal to or smaller than a depth of the groove portion (12).

2. The cushion body (11) according to claim 1, wherein the cushion body (11) is molded by blowing steam to the fibrous structure through steam holes (43) formed on a mold face of the mold (40) under barometrical pressure higher than atmospheric pressure.

3. The cushion body (11) according to claim 2, wherein the barometrical pressure is a saturated steam pressure at a temperature at a melting point of the binder fibers or above and lower than a melting point of the main fibers.

4. The cushion body (11) according to claim 1, wherein the steam holes (43) are formed to be more in a region corresponding to the side of a non-load receiving face (10b) where a load from outside the cushion body (11) is not received than in a region corresponding to a load receiving face (10a) where the load from outside the cushion body (11) is received in the mold (40); and
the cushion body (11) is molded by blowing steam to the fibrous structure through the steam holes (43) on the side of the non-load receiving face (10b).

5. A seat including a cushion body (11) and a seat frame (15) supporting the cushion body (11), wherein the cushion body (11) is either one of the cushion bodies according to any one of claims 1 to 4.

6. The seat according to clam 5, wherein a cover (13) is affixed on a surface of the cushion body (11).

7. A method of manufacturing a cushion body (11) provided with a plurality of fibrous structures, comprising at least:
a fibrous structure forming step of successively folding a web (2) composed of main fibers and binder fibers for each predetermined length to form a fibrous structure as a stacked state;
a fibrous structure disposing step of disposing the plurality of fibrous structures (4a, 4b, 4c, 4d, 4e) in a compressed state in a mold (40) having a groove formation portion (41 a) for forming a groove portion (12) in a recess state in the thickness direction of the cushion body (11) formed on a mold face so that the fibrous structure having a thickness substantially equal to or smaller than a depth of the groove portion (12) is brought into contact with the groove formation portion (41 a); and
a molding step of thermally molding the fibrous structure in the mold (40) to form a cushion body (11).

8. The method of manufacturing a cushion body (11) according to claim 7, wherein, in the molding step, steam is blown to the fibrous structure through steam holes (43) formed on a mold face of the mold (40) under barometrical pressure higher than atmospheric pressure.

9. The method of manufacturing a cushion body (11) according to claim 8, wherein the barometrical pressure is a saturated steam pressure at a temperature at a melting point of the binder fibers or above and lower than a melting point of the main fibers.

10. The method of manufacturing a cushion body (11) according to claim 7, wherein the steam holes (43) are formed to be more in a region corresponding to the side of a non-load receiving face (10b) where a load from outside the cushion body (11) is not received than in a region corresponding to a load receiving face (10a) where the load from outside the cushion body (11) is received in the mold (40); and
the cushion body (11) is molded by blowing steam to the fibrous structure through the steam holes (43) on the side of the non-load receiving face (10b) in the molding step.

11. A method of manufacturing a seat provided with a cushion body (11) and a seat frame (15) supporting the cushion body (11), comprising at least: a step of forming the cushion body (11) according to the method of manufacturing a cushion body (11) according to claims 7 to 10; and a step of attaching the cushion body (11) to the seat frame (15).

## Patentansprüche

1. Polsterkörper (11), der erzeugt wird, indem eine Faserstruktur, die erzeugt wird, indem Haupt-Fasern und Binde-Fasern gemischt werden, unter Verwendung eines Formwerkzeugs (40) geformt wird, das einen Hohlraum (40a) mit einer vorgegebenen Form hat, wobei der Polsterkörper (11) ausgebildet wird, indem eine Vielzahl der Faserstrukturen (4a, 4b, 4c, 4d, 4e) übereinander geschichtet werden und Nutabschnitte (12) in einer Oberflächenschicht in einem vertieften Zustand in einer Dickenrichtung der Faserstrukturen ausgebildet werden;
die Faserstruktur ausgebildet wird, indem eine Bahn (2), die aus einem Gemisch der Haupt-Fasern und der Binde-Fasern zusammengesetzt ist, so geschichtet wird, dass sich die Bahn (2) in der Dickenrichtung der Faserstruktur erstreckt; und
die in der Oberflächenschicht geschichtete Faserstruktur (4e) eine Dicke hat, die im Wesentlichen genauso groß ist wie oder kleiner als eine Tiefe des Nutabschnitts (12).

2. Polsterkörper (1) nach Anspruch 1, wobei der Polsterkörper (11) geformt wird, indem Dampf über Dampflöcher (43), die an einer Formfläche des Formwerkzeugs (4) ausgebildet sind, unter Luftdruck auf die Faserstruktur geblasen wird, der höher ist als atmosphärischer Druck.

3. Polsterkörper (11) nach Anspruch 2, wobei der Luftdruck ein Druck von gesättigtem Dampf bei einer Temperatur auf einem Schmelzpunkt der Binde-Fasern oder über und unter einem Schmelzpunkt der Haupt-Fasern ist.

4. Polsterkörper (11) nach Anspruch 1, wobei die Dampflöcher (43) so ausgebildet sind, dass sie in einem Bereich, der der Seite einer keine Last aufnehmenden Fläche (10b) entspricht, an der keine Last von außerhalb des Polsterkörpers (11) aufgenommen wird, zahlreicher sind als in einem Bereich, der einer Lastaufnahmefläche (10a) entspricht, an der Last von außerhalb des Polsterkörpers (11) in dem Formwerkzeug (40) aufgenommen wird; und
der Polsterkörper (11) geformt wird, indem Dampf über die Dampflöcher (43) an der Seite der keine Last aufnehmenden Fläche (10b) auf die Faserstruktur geblasen wird.

5. Sitz, der einen Polsterkörper (11) und einen Sitzrahmen (15) enthält, der den Polsterkörper (11) trägt, wobei der Polsterkörper (11) einer der Polsterkörper nach einem der Ansprüche 1 bis 4 ist.

6. Sitz nach Anspruch 5, wobei eine Abdeckung (13) an einer Oberfläche des Polsterkörpers (11) befestigt ist.

7. Verfahren zum Herstellen eines Polsterkörpers (11), der mit einer Vielzahl von Faserstrukturen versehen ist, wobei das Verfahren wenigstens umfasst:
einen Schritt zum Ausbilden einer Faserstruktur, in dem eine Bahn (2), die aus Haupt-Fasern und Binde-Fasern besteht, über jede vorgegebene Länge gefaltet wird, um eine Faserstruktur in einem übereinander geschichteten Zustand auszubilden;
einen Schritt zum Anordnen der Faserstruktur, in dem die Vielzahl von Faserstrukturen (4a, 4b, 4c, 4d, 4e) in einem zusammengedrückten Zustand in einem Formwerkzeug (40) angeordnet werden, das einen Nutausbildungsabschnitt (41a) zum Ausbilden eines Nutabschnitts (12) in einem vertieften Zustand in der Dickenrichtung des Polsterkörpers (11) aufweist, der an einer Formwerkzeugfläche so ausgebildet ist, dass die Faserstruktur, die eine Dicke hat, die im Wesentlichen genauso groß ist wie oder kleiner als eine Tiefe des Nutabschnitts (12), in Kontakt mit dem Nutausbildungsabschnitt (41a) gebracht wird, und
einen Formschritt, in dem die Faserstruktur in dem Formwerkzeug (40) thermisch geformt wird, um einen Polsterkörper (11) auszubilden.

8. Verfahren zum Herstellen eines Polsterkörpers (11) nach Anspruch 7, wobei bei dem Formschritt Dampf über Dampflöcher (43), die an einer Formwerkzeugfläche des Formwerkzeugs (40) ausgebildet sind, mit Luftdruck auf die Faserstruktur geblasen wird, der höher ist als atmosphärischer Druck.

9. Verfahren zum Herstellen eines Polsterkörpers (11) nach Anspruch 8, wobei der Luftdruck ein Druck von gesättigtem Dampf bei einer Temperatur auf einem Schmelzpunkt der Binde-Fasern oder über und unter einem Schmelzpunkt der Haupt-Fasern ist.

10. Verfahren zum Herstellen eines Polsterkörpers (11) nach Anspruch 7, wobei die Dampflöcher (43) so ausgebildet sind, dass sie in einem Bereich, der der Seite einer keine Last aufnehmenden Fläche (10b) entspricht, an der keine Last von außerhalb des Polsterkörpers (11) aufgenommen wird, zahlreicher sind als in einem Bereich, der einer Lastaufnahmefläche (10a) entspricht, an der Last von außerhalb des Polsterkörpers (11) in dem Formwerkzeug (40) aufgenommen wird; und
der Polsterkörper (11) geformt wird, indem Dampf über die Dampflöcher (43) an der Seite der keine Last aufnehmenden Fläche (10b) auf die Faserstruktur geblasen wird.

11. Verfahren zum Herstellen eines Sitzes, der mit einem Polsterkörper (11) und einem Sitzrahmen (15) versehen ist, der den Polsterkörper (11) trägt, wobei das Verfahren wenigstens einen Schritt des Ausbildens des Polsterkörpers (11) gemäß dem Verfahren zum Herstellen eines Polsterkörpers (11) nach den Ansprüchen 7 bis 10 und einen Schritt des Anbringens des Polsterkörpers (11) an dem Sitzrahmen (15) umfasst.

## Revendications

1. Corps de coussin (11) obtenu par moulage d'une structure fibreuse obtenue grâce au mélange de fibres principales et de fibres de liage, à l'aide d'un moule (40) qui comporte une cavité (40a) ayant une forme prédéterminée, étant précisé que le corps de coussin (11) est formé par empilement de plusieurs structures fibreuses (4a, 4b, 4c, 4d, 4e), et que des parties formant rainures (12) sont formées dans une couche de surface dans un état d'enfoncement dans le sens de l'épaisseur des structures fibreuses ;
que la structure fibreuse est formée par empilement d'une âme (2) composée d'un mélange de fibres principales et de fibres de liage, de sorte que l'âme (2) s'étend le long du sens de l'épaisseur de la structure fibreuse ; et
que la structure fibreuse (4e) empilée dans la couche de surface a une épaisseur globalement égale ou inférieure à une épaisseur de la partie formant rainure (12).

2. Corps de coussin (11) selon la revendication 1, étant précisé qu'il est moulé par projection de vapeur sur la structure fibreuse à travers des trous de vapeur (43) formés sur une face de moulage du moule (40), à une pression barométrique supérieure à la pression atmosphérique.

3. Corps de coussin (11) selon la revendication 2, étant précisé que la pression barométrique est une pression de vapeur saturée, à une température située au niveau d'un point de fusion des fibres de liage ou au-dessus, et inférieure à un point de fusion des fibres principales.

4. Corps de coussin (11) selon la revendication 1, étant précisé que les trous de vapeur (43) sont formés de manière à être plus nombreux dans une zone du moule (40) correspondant au côté d'une face non réceptrice de charge (10b) où une charge provenant de l'extérieur du corps de coussin (11) n'est pas reçue, que dans une zone correspondant à une face de réception de charge (10a) où la charge provenant de l'extérieur du corps de coussin (11) est reçue ; et
que le corps de coussin (11) est moulé par projection de vapeur sur la structure fibreuse à travers les trous de vapeur (43) sur le côté de la face non réceptrice de charge (10b).

5. Siège comprenant un corps de coussin (11) et un châssis de siège (15) supportant le corps de coussin (11), étant précisé que le corps de coussin (11) est constitué par l'un des corps de coussin selon l'une quelconque des revendications 1 à 4.

6. Siège selon la revendication 5, étant précisé qu'un recouvrement (13) est fixé sur une surface du corps de coussin (11).

7. Procédé pour fabriquer un corps de coussin (11) pourvu de plusieurs structures fibreuses, comprenant au moins :
une étape de formation de structure fibreuse qui consiste à plier successivement une âme (2) composée de fibres principales et de fibres de liage pour chaque longueur prédéterminée, afin de former une structure fibreuse sous forme d'empilement ;
une étape de disposition de structure fibreuse qui consiste à disposer les structures fibreuses (4a, 4b, 4c, 4d, 4e) dans un état comprimé dans un moule (40) qui présente une partie de formation de rainures (41a) pour former une partie formant rainure (12) dans un état d'enfoncement dans le sens de l'épaisseur du corps de coussin (11) formé sur une face de moule, de sorte que la structure fibreuse qui présente une épaisseur globalement égale ou inférieure à une profondeur de la partie formant rainure (12) soit amenée en contact avec la partie de formation de rainures (41a) ; et
une étape de moulage qui consiste à mouler thermiquement la structure fibreuse dans le moule (40) afin de former un corps de coussin (11).

8. Procédé pour fabriquer un corps de coussin (11) selon la revendication 7, étant précisé que lors de l'étape de moulage, de la vapeur est projetée sur la structure fibreuse à travers des trous de vapeur (43) formés sur une face de moulage du moule (40), à une pression barométrique supérieure à la pression atmosphérique.

9. Procédé pour fabriquer un corps de coussin (11) selon la revendication 8, étant précisé que la pression barométrique est une pression de vapeur saturée, à une température située au niveau d'un point de fusion des fibres de liage ou au-dessus, et inférieure à un point de fusion des fibres principales.

10. Procédé pour fabriquer un corps de coussin (11) selon la revendication 7, étant précisé que les trous de vapeur (43) sont formés de manière à être plus nombreux dans une zone du moule (40) correspondant au côté d'une face non réceptrice de charge (10b) où une charge provenant de l'extérieur du corps de coussin (11) n'est pas reçue, que dans une zone correspondant à une face de réception de charge (10a) où la charge provenant de l'extérieur du corps de coussin (11) est reçue ; et
que le corps de coussin (11) est moulé par projection de vapeur sur la structure fibreuse à travers les trous de vapeur (43) sur le côté de la face non réceptrice de charge (10b), lors de l'étape de moulage.

11. Procédé pour fabriquer un siège pourvu d'un corps de coussin (11) et un châssis de siège (15) supportant le corps de coussin (11), comprenant au moins : une étape de formation du corps de coussin (11) selon le procédé de fabrication d'un corps de coussin (11) selon les revendications 7 à 10 ; et une étape de fixation du corps de coussin (11) au châssis de siège (15).
